Europäisches Patentamt

European Patent Office

Office européen des brevets

(11) Veröffentlichungsnummer: **0 476 297 A1**

## (12) EUROPÄISCHE PATENTANMELDUNG

(21) Anmeldenummer: **91113512.7**

(22) Anmeldetag: **12.08.91**

(51) Int. Cl.5: **H01G 9/00**

(30) Priorität: **10.09.90 DE 9012890 U**

(43) Veröffentlichungstag der Anmeldung:
**25.03.92 Patentblatt 92/13**

(84) Benannte Vertragsstaaten:
**DE ES FR GB IT SE**

(71) Anmelder: **SIEMENS AKTIENGESELLSCHAFT
Wittelsbacherplatz 2
W-8000 München 2(DE)**

(72) Erfinder: **Schweikert, Wilhelm, Dipl.-Ing. (FH)
Kistelbergstrasse 33
W-7920 Heidenheim(DE)**
Erfinder: **Aigle, Karl, Dipl.-Ing. (FH)
Max-Beckmann-Strasse 45
W-7920 Heidenheim(DE)**

(54) Elektrolytkondensator mit verringerter Induktivität.

(57) Bei einem Elektrolytkondensator werden aus dem Kondensatorwickel (6) Anschlußbändchen (7) herausgeführt, die an eine in einer Deckscheibe (8) angeordneten Durchführung (9) ankontaktiert sind. Die Anschlußbändchen (7) sind mittels einer einfachen Klappfaltung aus dem Wickel (6) herausgeführt.

FIG 3

Die Erfindung betrifft einen Elektrolytkondensator mit verringerter Induktivität, bei dem aus einem Kondensatorwickel austretende Anschlußbändchen an eine in einer Abschlußscheibe angeordneten Durchführung kontaktiert sind.

Bei derartigen Kondensatoren ist es bisher üblich, die Anschlußbändchen am Wickelaustritt Z-förmig zu gestalten, um die Abschlußscheibe sachgerecht zu montieren.

Diese Ausgestaltung hat den Nachteil, daß sehr lange Bändchen gefaltet werden müssen, die bei gegenseitiger Berührung Kurzschlüsse verursachen und eine durch die Länge bedingte hohe Induktivität erzeugen.

Aufgabe der Erfindung ist es, den eingangs genannten Elektrolytkondensator derart weiterzubilden, daß einerseits die Gefahr von Kurzschlüssen verringert wird und andererseits eine verringerte Induktivität resultiert.

Diese Aufgabe wird erfindundungsgemäß dadurch gelöst, daß die Anschlußbändchen mittels einer einfachen Klappfaltung aus dem Wickel herausgeführt sind.

Der Gegenstand der Erfindung wird anhand der folgenden Ausführungsbeispiele erläutert.

In der dazugehörigen Zeichnung zeigen

Figuren 1 und 2 einen Elektrolytkondensator nach dem Stand der Technik in Seitenansicht und Draufsicht und

Figuren 3 und 4 einen Elektrolytkondensator gemäß der Erfindung in Seitenansicht und Draufsicht.

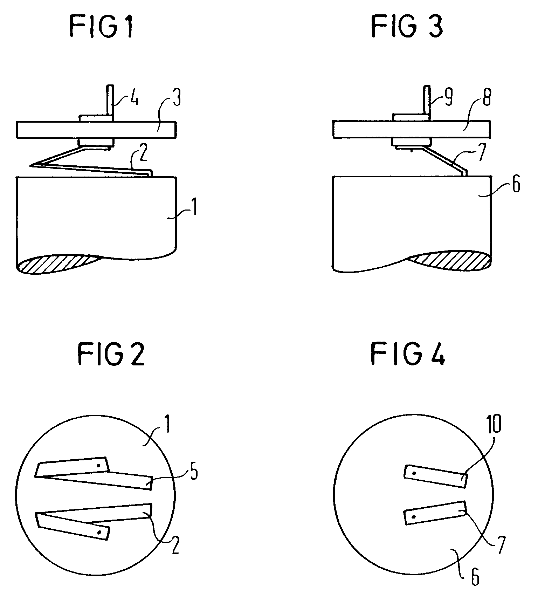

In der Figur 1 ist ein Kondensatorwickel 1 dargestellt, der ein Anschlußbändchen 2 besitzt, das aus dem Wickel 1 herausgeführt ist und eine "Z-förmige" Faltung besitzt. Das Anschlußbändchen 2 ist an einer in der Abschlußscheibe 3 angeordneten Durchführung 4 ankontaktiert.

In der Figur 2 ist eine Draufsicht auf den Kondensatorwickel 1 dargestellt, bei dem Zwei "Z-förmig" gefaltete Anschlußbändchen 2,5 aus dem Wickel 1 herausgeführt sind.

Wie den Figuren 1 und 2 zu entnehmen ist, sind die Anschlußbändchen 2,5 länger als es für den Abstand zwischen Kondensatorwikkel 1 und Abschlußscheibe 3 an und für sich erforderlich wäre. Dadurch besteht die Gefahr, daß sich die Anschlußbändchen 2,5 gegenseitig berühren und Kurzschlüsse verursachen. Weiterhin erhöht sich die Induktivität des Elektrolytkondensators bedingt durch die große Länge der Anschlußbändchen 2,5.

In der Figur 3 ist ein Kondensator gemäß der Erfindung in Seitenansicht dargestellt, bei dem aus dem Kondensatorwickel 6 ein Anschlußbändchen 7 herausgeführt ist und an eine in einer Deckscheibe 8 angeordneten Durchführung 9 ankontaktiert ist.

Wie der Figur 3 zu entnehmen ist, weist das Anschlußbändchen 7 eine einfache Klappfaltung auf.

In der Figur 4 ist eine Draufsicht auf den Kondensatorwickel 6 dargestellt, aus dem zwei Anschlußbändchen 7,10 herausgeführt sind.

Den Figuren 3 und 4 ist zu entnehmen, daß durch die Ausgestaltung nach der Erfindung die Anschlußbändchen 7,10 wesentlich kürzer sind als es bisher beim Stand der Technik der Fall war. Dadurch werden sowohl die Gefahr für Kurzschlüsse als auch die Induktivität des Kondensators verringert.

Eine weitere Verringerung der Induktivität wird erreicht, wenn der Abstand zwischen dem Austritt der Anschlußbändchen 7,10 möglichst klein oder überlappend gewählt wird.

**Patentansprüche**

1. Elektrolytkondensator mit verringerter Induktivität, bei dem aus einem Kondensatorwickel austretende Anschlußbändchen an eine in einer Abschlußscheibe angeordneten Durchführung kontaktiert sind, **dadurch gekennzeichet,** daß die Anschlußbändchen (7,10) mittels einer einfachen Klappfaltung aus dem Wickel (6) herausgeführt sind.

FIG 1

FIG 3

FIG 2

FIG 4

Europäisches Patentamt

**EUROPÄISCHER RECHERCHENBERICHT**

Nummer der Anmeldung

EP    91 11 3512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2 057 765 (NORTH AMERICAN PHILIPS CORP.)<br>* Seite 1, Zeile 40 - Zeile 59 *<br>* Seite 2, Zeile 2 - Zeile 57 *<br>* Seite 2, Zeile 71 - Zeile 78; Abbildung 3 *<br><br>----- | 1 | H01G9/00 |
| | | | **RECHERCHIERTE SACHGEBIETE (Int. Cl.5 )**<br><br>H01G |

Der vorliegende Recherchenbericht wurde für alle Patentansprüche erstellt

| Recherchenort | Abschlußdatum der Recherche | Prüfer |
|---|---|---|
| DEN HAAG | 29 JANUAR 1992 | GOOSSENS A, |